# EUROPÄISCHE PATENTANMELDUNG

(11) **EP 0 654 929 A1**
(43) Veröffentlichungstag der Anmeldung: **24.05.1995**
(21) Anmeldenummer: 94118025.9
(22) Anmeldetag: 15.11.1994
(51) Int. Cl.: H04M 1/03

(54) **Handapparat für eine Fernsprechstation**

(30) Priorität: 24.11.1993 DE 9317982 U
(71) Anmelder: SIEMENS AKTIENGESELLSCHAFT, D-80333 München (DE)
(72) Erfinder: Böhnke, Gerd,Dipl.-Phys., D-46236 Bottrop (DE); Reuschel, Jürgen, D-46399 Bocholt (DE); Müller, Heinz-Dieter,Dipl.-Ing., D-46446 Emmerich (DE); Klauker, Karl-Heinz,Dipl.Ing., D-46282 Dorsten (DE)

(57) **Zusammenfassung**

Aus Ober- nd Unterschale (2, 3) bestehender Handapparat (1) für eine Fernsprechstation, in dem eine Hör- und Sprechkapsel angeordnet sind, die über an ihnen vorgesehene Schneidklemmkontakte (10, 11) mit den Leitungen (7, 8) der Handapparateanschlußschnur kontaktiert sind.
Der Erfindung liegt die Aufgabe zugrunde, insbesondere die Sprechkapsel so zu gestalten, daß sie die an sie gestellten Anforderungen im Hinblick auf die Akustik, Montagefreundlichkeit und Anpassung an verschiedene Designs optimal erfüllt. Diese Aufgabe wird dadurch gelöst, daß die Sprechkapsel durch ein auf einer separaten Halterung (6) angebrachtes Elektretmikrofon (5) gebildet ist, wobei die Halterung (6) so gestaltet ist, daß sie in verschiedene Handapparatetypen einsetzbar und dem jeweiligen erforderlichen Vorkammervolumen des Handapparates (1) anpaßbar ist.

## Beschreibung

Die vorliegende Erfindung beinhaltet einen aus Ober- und Unterschale bestehenden Handapparat für eine Fernsprechstation, in dem eine Hör- und Sprechkapsel angeordnet sind, die über an ihnen vorgesehene Schneidklemmkontakte mit den Leitungen der Handapparateanschlußschnur kontaktiert sind.

Ein in dieser Weise aufgebauter Handapparat ist z. B. durch die DE 37 27 328 C1 bekannt. Hierbei weisen die von der Unterschale aufgenommene Hör- und Sprechkapsel jeweils Schneidklemmen auf, in die die Anschlußleiterpaare mit an der Oberschale vorgesehener, die Schneidklemmen umgreifender Nasen beim Zusammenbau der Gehäuseschalen in die Schneidklemmen eingedrückt und somit kontaktiert werden.

Wahrend als Hörkapseln zumeist dynamische Wandler zum Einsatz gelangen, werden bei einer Vielzahl von Handapparaten aus Gründen des Designs und somit platzbedingt Elektretmikrofone verwendet. Bei der Vorbereitung des Elektretmikrofons zu dessen Einsatz in den Handapparat wurde auf das Elektret ein Kondensator aufgelötet, worauf anschließend die Anschlußleiter durch Löten angebracht wurden. Dieses so vorbereitete Elektretmikrofon wurde in einem separaten Halter untergebracht, der wiederum in den Handapparat eingesetzt wurde.

Eine weitere Variante zur Befestigung des Elektretmikrofons im Handapparat besteht darin, daß das Elektret zunächst in einen Halter eingesetzt wird. Dieser Halter wird auf einer Leiterplatte montiert, auf der auch der Kondensator angeordnet ist. Die durch entsprechende Durchbrüche in der Leiterplatte hindurchragenden Anschlußenden werden in einem nachfolgenden Arbeitsgang mit der Leiterplatte verbunden. Beim Zusammenbau des Handapparates wird der Elektrethalter auf eine ihm konturmäßig entsprechende Dichtung im Bereich der Unterschale gedrückt.

Eine weitere Variante besteht darin, daß das Elektret in eine Gummitülle eingesetzt wird. Anschließend wird das in der Weise vormontierte Mikrofon in eine spezielle Aufnahme in der Handapparateschale eingebaut.

Der vorliegenden Erfindung liegt die Aufgabe zugrunde, die ein Elektretmikrofon aufweisende Einsprache so zu gestalten, daß sie die an sie gestellten Anforderungen im Hinblick auf die Akustik, Montagefreundlichkeit und Anpassung an verschiedene Designs optimal erfüllt.

Diese Aufgabe wird dadurch gelost, daß die Sprechkapsel durch ein auf einer separaten Halterung angebrachtes Elektretmikrofon gebildet ist, wobei die Halterung so gestaltet ist, daß sie universell in verschiedene Handapparatetypen einsetzbar und dem erforderlichen Vorkammervolumen des Handapparates anpaßbar ist.

Eine derart gestaltete Halterung für das Elektretmikrofon kann in verschiedenen Handapparatetypen zur Anwendung gelangen, da an der Halterung Mittel vorgesehen sind, die es ermöglichen, das benötigte Vorkammervolumen einer stark variierenden Anzahl von Schalldurchlaßöffnungen anzupassen. Dies kann z. B. dadurch erfolgen, daß die Halterung mit der Unterschale des Handapparates verbindbar ist und in diesem Bereich zumindest zwei Ringkonturen aufweist, die je nach Anwendungsfall mit ihnen durchmessermäßig angepaßten, ringförmigen Aufnahmen in der Unterschale zusammenarbeiten. Dadurch läßt sich bei unterschiedlichen gestalteten Handapparatetypen das erforderliche Vorkammervolumen für das Elektretmikrofon-Modul bilden, so daß die Halterung in einer Vielzahl von Handapparatedesigns einsetzbar ist.

Gemäß einer bevorzugten und komplett mittels eines Fertigungsautomaten herstellbaren Ausführungsform der Halterung für das Elektretmikrofon kann diese aus einem Grundkörper bestehen, der eine Aufnahme für das Elektretmikrofon aufweist, wobei ferner an dem Grundkörper Befestigungsmittel für Kontaktfedern, federnde Zapfen zur klemmbaren Aufnahme von zusätzlichen elektrischen Bauteilen und Schneidklemmkontakte zur elektrischen Verbindung des Mikrofon-Moduls mit der Anschlußschnur für den Handapparat vorgesehen sind. Bei dieser Ausführungsform wird das Elektret polungsrichtig in die Aufnahme eingebracht und mit Teilen der Kontaktfedern verbunden. Die Zusatzbauelemente in Form eines EMV-Kondensators oder einer Zenerdiode (Überspannungsschutz) können dabei zwischen die federnden Zapfen am Grundkörper eingeklemmt gehaltert und anschließend mit den entsprechenden Teilen der Kontaktfedern verlötet werden. Zur Einstellung der Elektretempfindlichkeit mittels eines Widerstandes muß bei den Kontaktfedern jeweils eine Trennstelle vorgesehen werden, die dann mit dem auf das Elektret abgestimmten Widerstand überbrückt wird. Diese Empfindlichkeitsabstimmung ist vor allem bei einem automatisierten Einsatz des Elektrets in die Halterung sinnvoll, da man zwar vor dem Einsetzen des Elektrets die Polung messen muß, in diesem Fall jedoch sofort die Ist-Empfindlichkeit des Elektrets feststellen kann. Mittels dieser ermittelten Ist-Empfindlichkeit kann man für die geforderte Soll-Empfindlichkeit den Abstimmwiderstand auswählen.

Zur Festlegung der Kontaktfedern können am Grundkörper der Halterung mehrere Dome vorgesehen sein, die in ihnen anzahlmäßig entsprechende Löcher in den Kontaktfedern eingreifen. Dadurch kann eine Rastverbindung zwischen den Domen und den Kontaktfedern hergestellt werden. Die Dome können auch nach dem Aufsetzen der Kontaktfedern warm verformt werden, so daß eine sichere Verbindung der Kontaktfedern mit dem Grundkörper erreicht wird. Die Kontaktfedern selbst können in der Weise gestaltet sein, daß sie aus einem Löcher enthaltenen Basisbereich, winkelförmig zu diesem Basisbereich abgebogenen und die Klemmkontakte enthaltenden Bereichen sowie weiteren winkelförmig zu den Basisbereichen vorgesehenen und zueinanderweisenden Stegen aufgebaut sind, wobei diese letztgenannten Stege in ihren freien und voneinander beabstandeten Endbereichen Anschlußkontakte für die Anschlußstifte des Elektretmikrofons aufweisen. Weiterhin können die Schneidklemmkontakte aus zumindest einem Zugentlastungselement und einem mit diesem Zugentlastungselement fluchtenden Klemmkontakt aufgebaut sein. Dadurch ist es z. B. beim Zusammenbau des Handapparates möglich, die entsprechenden Leiter zum Anschluß von Hör- und Sprechkapsel vorab zu zentrieren, d. h. die Leiter werden zunächst im Zugentlastungsbereich leicht geklemmt an ihrer Isolation gehalten und anschließend in einer Vorrichtung in den ihm zugeordneten Klemmbereich eingedruckt, in dem sie mit der Schneidklemme kontaktiert sind.

Die Erfindung soll im folgenden anhand eines Ausführungsbeispiels erläutert werden.

Es zeigt
Figur 1 in einer Explosionsdarstellung den aus Ober- und Unterschale bestehenden Handapparat mit einer Hörkapsel und einem Mikrofon,
Figur 2 eine geschnittene Seitenansicht des zusammengebauten Handapparates mit den eingebrachten Bauteilen,
Figur 3 eine Seitenansicht der Halterung für die erste Ausführungsform eines Elektretmikrofons,
Figur 4 eine Aufsicht auf die Halterung nach Figur 3,
Figur 5 in einer Explosionsdarstellung eine zweite Ausführungsform der Halterng für ein Elektretmikrofon,
Figur 6 die Halterung nach Figur 5 im zusammengebauten Zustand.

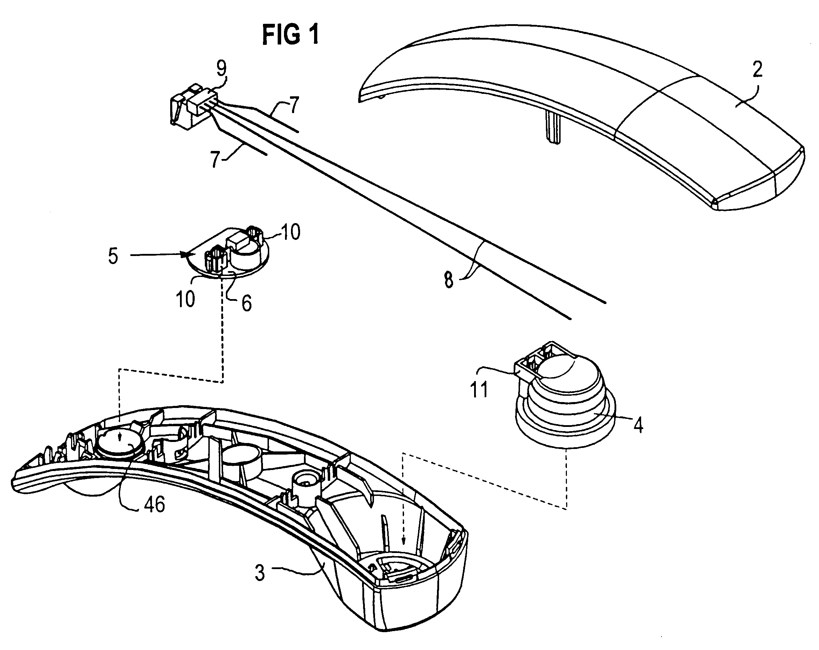

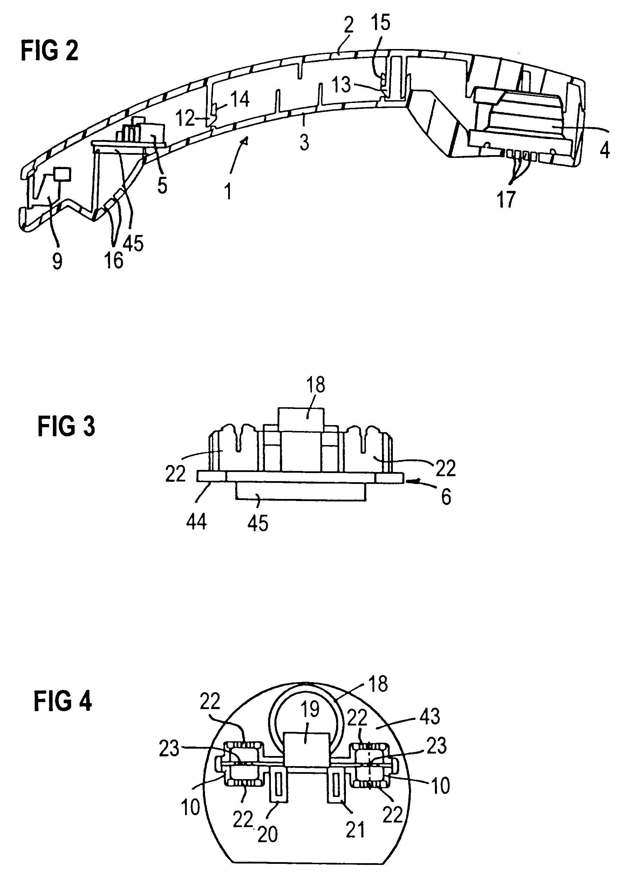

Der in Figur 1 dargestelle Handapparat 1 besteht aus der Oberschale 2 und der Unterschale 3, die wie aus Figur 2 ersichtlich, durch eine Rastverbindung zusammengefügt sind. Die Unterschale 3 dient zur Aufnahme einer Hörkapsel 4 in Form eines dynamischen Wandlers sowie eines Mikrofonmoduls 5, das in diesem Falle ein Elektretmikrofon aufweist und auf einer universell für verschiedene Handapparatetypen verwendbaren Halterung 6 befestigt ist. Die elektrische Verbindung der Hörkapsel 4 sowie des Mikrofons 5 erfolgt über Leiterpaare 7 und 8, die von einer gemeinsamen Steckerbuchse 9 ausgehen. Die Verbindung der Leiterpaare 7 und 8 mit der Hörkapsel 4 und dem Mikrofonmodul 5 wird mittels bekannter Schneidklemmen 10 und 11 vorgenommen, wobei jede Schneidklemme einen Bereich aufweist, in dem der in einen Klemmschlitz eingedrückte Leiter unter Durchtrennung seiner Isolation mit der Klemme kontaktiert ist und einen weiteren parallel zu diesem Bereich angeordneten Bereich mit einem Schlitz aufweist, der den Leiter an seiner Isolation umfaßt und somit zur Zugentlastung der eigentlichen Kontaktstelle dient. Auf diese Schneidklemmkontakte soll später näher eingegangen werden.

Bei der vorliegenden Ausführungsform (Figur 3 und 4) weist der Halter 6 für das Elektretmikrofon an seiner die Bauteile aufnehmenden Fläche 43 abgewandten Fläche 44 eine Ringkontur 45 auf, die mit einer in der Unterschale 3 des Handapparates 1 angeordneten und ihr durchmessermäßig angepaßten ringförmigen Aufnahme 46 zusammenarbeitet, d. h. die Halterung 6 für das Mikrofon wird auf die Aufnahme 46 im Unterteil aufgedrückt. Dabei bildet die Ringkontur 45 der Halterung 6 das erforderliche Vorkammervolumen für das Mikrofonmodul 5.

In Figur 2 ist der Handapparat 1 im zusammengefügten Zustand von Ober- und Unterschale 2 und 3 gezeigt. Aus dieser Figur 2 ist deutlich zu erkennen, wie an der Oberschale 2 angebrachte Rasthaken 12 und 13 mit ihnen formmäßig entsprechenden Rastaufnahmen 14 und 15 zusammenarbeiten. In dem Handapparategehäuse sind die Bauteile wie das Mikrofonmodul 5, die Hörkapsel 4 sowie die Steckerbuchse 9 untergebracht, wobei in der Unterschale 3 im Bereich des Mikrofons 5 die Schalldurchlaßöffnungen 16 und im Bereich der Hörkapsel 4 die Schalldurchlaßöffnungen 17 vorgesehen sind.

In den Figuren 3 und 4 ist eine erste Ausführungsform eines Mikrofonmoduls dargestellt. Das Mikrofonmodul besteht aus einem Halter 6, einer Aufnahme 18 für das Elektretmikrofon sowie einer Kontaktanordnung zum Kontaktieren des Elektretmikrofons und eines gegebenenfalls zusätzlich anzuschließenden elektrischen Bauteils, z. B. einer Zenerdiode zum Schutz des Mikrofons gegenüber Spannungsdurchschlägen aufgrund elektrostatischer Aufladung. Hierbei wird durch die Fläche 19 die Kontaktierung des Elektretmikrofons angedeutet, während die Flächen 20 und 21 zur Kontaktierung des zuvor erwähnten zusätzlichen elektrischen Bauteils verwendet werden können. Wie aus den Figuren 3 und 4 weiter zu erkennen ist, sind zur Kontaktierung des Leiterpaares 7 Schneidklemmkontakte 10 vorgesehen, die, wie bereits zuvor erwähnt, aus einem Zugentlastungsbereich und dem eigentlichen Kontaktbereich bestehen. Die Zugentlastungsbereiche 22 sind bei diesem Mikrofonmodul so gestaltet, daß der Aufnahmeschlitz in seiner lichten Weite etwas kleiner ist als der Außendurchmesser des isolierten Leiters, so daß der jeweilige Leiter an seiner Isolation in diesem Bereich leicht geklemmt gehalten ist, während der zwischen den beiden Zugentlastungsbereichen befindliche und in dem Blech 23 vorgesehene Klemmschlitz bezuglich seiner lichten Weite so bemessen ist, daß die Isolation des Leiters durchtrennt und somit ein elektrischer Kontakt zwischen dem Leiter und dem Blech 23 hergestellt wird.

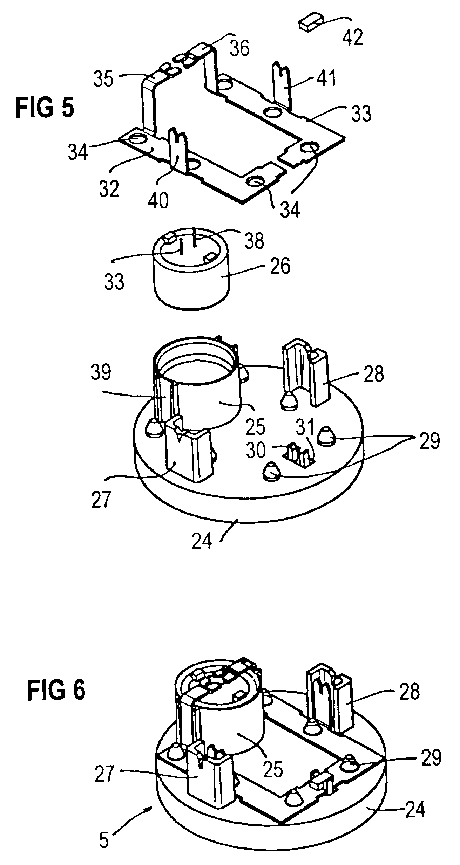

In den Figuren 5 und 6 ist eine weitere mögliche Ausbildung des Mikrofonmoduls 5 dargestellt, wobei diese Ausführungsform mittels eines Fertigungsautomaten hergestellt werden kann.

Dieses Mikrofonmodul 5 besteht aus einem Grundkörper 24, an dem eine Aufnahme 25 für ein handelsübliches Elektretmikrofon 26 sowie U-förmige Zugentlastungselemente 27 und 28, mehrere Dome 29 und federnde Zapfen 30 und 31 vorgesehen sind. Die baugleichen Kontaktfedern 32 und 33 weisen eine der Anzahl der Dome 29 entsprechende Anzahl von Löchern 34 auf, wobei die Kontaktfedern 32 und 33 nach ihrem Aufbringen auf die Dome 29 durch deren Warmverformen mit dem Grundkörper 24 mechanisch verbunden werden. Die Kontaktfedern besitzen zunächst winkelförmig von ihren Grundflächen abgebogene und anschließend zueinander gebogene Stege 35 und 36, die in ihren freien Endbereichen schlitzförmige Kontaktaufnahmen für die Anschlußstifte 37 und 38 des Elektretmikrofons 26 aufweisen. Diese Stege 35 und 36 werden in ihnen konturmäßig angepaßte Führungen 39 an der Aufnahme 25 für das Elektretmikrofon gehaltert. Die Kontaktfedern 32 und 33 weisen ferner senkrecht von ihren Grundflächen verlaufende Klemmkontakte 40 und 41 auf, in denen das Leiterpaar 7 mit dem Mikrofonmodul elektrisch kontaktiert wird. Wie bereits erwähnt, sind am Grundkörper 24 federnde Zapfen 30 und 31 angeordnet, die z. B. zur klemmbaren Aufnahme eines elektrischen Bauteils, z. B. des Kondensators 42 dienen. Nach dem polungsrichtigen Einbringen des Elektretmikrofons in die Aufnahme 25 werden die Kontaktfedern 32 und 33 durch Warmverformen der Dome 29 mit dem Grundkörper verbunden. Anschließend werden die Anschlußstifte 37 und 38 sowie das zwischen den Zapfen 30 und 31 gehalterte elektrische Bauteil 42 durch Löten mit den Kontaktfedern verbunden.

Der Grundkörper besitzt ebenfalls auf seiner Unterseite hier nicht näher dargestellte Ringkonturen, die mit entsprechenden Ringaufnahmen in der Unterschale 3 des Handapparates 1 zusammenarbeiten. Nach dem Einbringen des Mikrofonmoduls in die Unterschale des Handapparates kann dessen elektrische Verbindung mit dem Leiterpaar 7 durchgeführt werden.

## Patentansprüche

1. Aus einer Ober- und Unterschale (2, 3) bestehender Handapparat (1) für eine Fernsprechstation, in dem eine Hör- und Sprechkapsel (4, 5) angeordnet sind, die über an ihnen vorgesehene Schneidklemmkontakte (10, 11) mit den Leitungen (7, 8) der Handapparateanschlußschnur kontaktiert sind, **dadurch gekennzeichnet,** daß die Sprechkapsel durch ein auf einer separaten Halterung (6) angebrachtes Elektretmikrofon (5) gebildet ist, wobei die Halterung (6) so gestaltet ist, daß sie universell in verschiedene Handapparatetypen einsetzbar und dem erforderlichen Vorkammervolumen des Handapparates (1) anpaßbar ist.

2. Handapparat nach Anspruch 1, **dadurch gekennzeichnet,** daß die Halterung (6) mit der Unterschale (3) des Handapparates (1) verbindbar ist und in diesem Bereich zumindest zwei Ringkonturen (45) aufweist, die je nach Anwendungsfall mit ihnen durchmessermäßig angepaßten, ringförmigen Aufnahmen (46) in der Unterschale (3) zusammenarbeiten.

3. Handapparat nach Anspruch 1, **dadurch gekennzeichnet,** daß die Halterung (6) für das Elektretmikrofon (26) aus einem Grundkörper (24) besteht, der eine Aufnahme (25) für das Elektretmikrofon (26) aufweist, wobei ferner an dem Grundkörper (24) Befestigungsmittel (29) für Kontaktfedern (32, 33), federnde Zapfen (30, 31) zur klemmbaren Aufnahme von zusätzlichen elektrischen Bauteilen (42) und Schneidklemmkontakte (27, 28, 40, 41) zur elektrischen Verbindung des Mikrofonmoduls (5) mit der Anschlußschnur für den Handapparat (1) vorgesehen sind.

4. Handapparat nach Anspruch 2, **dadurch gekennzeichnet,** daß an dem Grundkörper (24) mehrere Dome (29) vorgesehen sind, die in ihnen anzahlmäßig entsprechende Löcher (34) der Kontaktfedern (32, 33) eingreifen.

5. Handapparat nach Anspruch 3 und 4, **dadurch gekennzeichnet,** daß die Kontaktfedern (32, 33) aus einem Löcher (34) enthaltenden Basisbereich, winkelförmig zu diesem Basisbereich abgebogenen und die Klemmkontakte (40, 41) enthaltenden Bereichen sowie weiteren winkelförmig zu den Basisbereichen vorgesehenen und zueinander weisenden Stegen (35, 36) aufgebaut sind, wobei diese Stege (35, 36) in ihren freien und voneinander beabstandeten Endbereichen Anschlußkontakte für die Anschlußstifte (37, 38) des Elektretmikrofons (26) aufweisen.

6. Handapparat nach Anspruch 1, **dadurch gekennzeichnet,** daß die Schneidklemmkontakte (10, 11) aus zumindest einem Zugentlastungselement (27, 28) und einem mit diesem Zugentlastungselement fluchtenden Klemmkontakt (41, 42) aufgebaut sind.
